# FASCICULE DE BREVET EUROPEEN

(11) **EP 3 298 765 B1**
(45) Date de publication et mention de la délivrance du brevet: **17.02.2021**
(21) Numéro de dépôt: 16733142.0
(22) Date de dépôt: 19.05.2016
(51) Int. Cl.: G07C 9/22, G09C 5/00, H04L 9/32, H04N 1/32, G06F 21/16

(54) **MARQUAGE EN FILIGRANE DE LA PHOTO D'UN DOCUMENT IDENTITAIRE ÉLECTRONIQUE LORS DE SA LECTURE**
WASSERZEICHNUNG EINE ID-DOKUMENTE BENUTZERBILD BEIM AUSLESEN
WATERMARKING OF THE USER PICTURE OF AN ID DOCUMENT DURING READOUT

(30) Priorité: 22.05.2015 FR 1554637
(43) Date de publication de la demande: 28.03.2018
(73) Titulaire: IDEMIA France, 92700 Colombes (FR)
(72) Inventeur: BARREAU, Cédric, 92700 Colombes (FR); FERAUD, Alban, 92700 Colombes (FR); VANDROUX, Coralie, 92700 Colombes (FR)
(74) Mandataire: Cabinet Beau de Loménie
(86) Numéro de dépôt international: PCT/FR2016/051188
(87) Numéro de publication internationale: WO 2016/189227

(56) Documents cités:
- US-A1- 2010 052 852
- R. Chandramouli ET AL: "Digital Watermarking" In: "Encyclopedia of Imaging Science and Technology", 1 janvier 2002 (2002-01-01), John Wiley & Sons, Inc., Hoboken, NJ, USA, XP055259424, ISBN: 978-0-471-44339-1 DOI: 10.1002/0471443395.img010, page 2, ligne 26 - page 3, ligne 39

## Description

### Arrière-plan de l'invention

La présente invention se rapporte au domaine des documents identitaires électroniques tels que les passeports ou cartes d'identité et porte plus particulièrement sur la création et l'utilisation de documents identitaires aptes à marquer une image numérique afin de contrôler sa diffusion.

Par « document identitaire électronique », on entend tous documents comportant des informations permettant d'identifier de façon plus ou moins sécurisée le propriétaire du document. Ces informations d'identité peuvent figurer physiquement sur le corps du document de façon à être vérifiable visuellement par une personne ou une machine de contrôle. En outre, il est possible de stocker des informations d'identité dans une mémoire contenue dans le corps du document identitaire (dans une puce par exemple), ces informations étant au besoin accessibles électroniquement par des moyens adaptés pour vérifier l'identité du propriétaire. Les documents identitaires les plus courants sont les passeports et les cartes d'identité, ce terme couvrant également les cartes et autres supports (clés USB, jeton etc.).

De façon connue, un document identitaire électronique, tel qu'un passeport électronique par exemple, contient des images numériques transmissibles à un terminal apte à traiter ces images. A l'occasion par exemple d'un contrôle, le document identitaire peut transmettre une telle image numérique à un premier terminal en réponse à une requête du premier terminal. Cette image numérique est en général transmise au terminal avec l'autorisation du propriétaire du document identitaire. Cependant, une fois cette image numérique transmise audit premier terminal, le propriétaire du document identitaire ne peut généralement plus contrôler l'utilisation qui en est faite ensuite par le premier terminal. En particulier, le propriétaire du document identitaire ne peut empêcher par la
suite la diffusion éventuelle par le premier terminal de l'image numérique vers des destinations non autorisées. Le manque de contrôle pose donc un problème de sécurité vis-à-vis de l'image numérique en question.

Dans certains cas, le propriétaire peut être dissocié du porteur physique. Dans ces cas le terme propriétaire peut avantageusement être remplacé par le terme porteur, sous-entendu le porteur du document électronique, comme on peut le lire régulièrement dans la documentation spécialisée.

Dans le cas par exemple des passeports électroniques, il est important de pouvoir contrôler si une image numérique transmise lors d'un contrôle d'identité est transmise ultérieurement, sans autorisation, du premier terminal vers un autre terminal. Ce besoin de contrôle est particulièrement critique dans le cas où ces images numériques constituent des informations confidentielles telles qu'une photo d'identité, ou une image biométrique (e.g. une image d'empreinte digitale ou une image d'iris) par exemple.

Il existe donc un besoin pour une solution permettant de contrôler efficacement la diffusion qui peut être faite par un terminal d'une image fournie par un document identitaire électronique (e.g. de type passeport électronique ou permis de conduire électronique), cette solution devant être adaptée aux capacités de la puce du document identitaire.

Le document US 2010/0052852 décrit un procédé d'inscription et de vérification d'informations biométriques dans un document d'identification. L'article scientifique de R. Chandramouli ET AL intitulé « Digital Watermarking », publié sous les références « Encyclopedia of Imaging Science and Technology », 1 janvier 2002, John Wiley & Sons, Inc., Hoboken, NJ, USA, XP055259424, décrit des techniques de marquage d'image.

### Objet et résumé de l'invention

La présente invention concerne un procédé de création d'un document identitaire électronique, le procédé comportant les étapes suivantes :
- obtention du fichier d'une image numérique d'origine,
- obtention d'au moins un bloc de données du fichier, dit bloc d'origine,
- pour chaque bloc d'origine :
   - création d'au moins deux blocs modifiés,
   - enregistrement de chaque bloc modifié dans une structure de données du document, chaque bloc modifié étant indexé dans la structure de données par l'emplacement du bloc d'origine dans le fichier d'une image numérique destinée à être marquée en utilisant
au moins un bloc modifié, et par une entrée différente,
dans lequel ledit fichier d'une image numérique destinée à être marquée est identique à un fichier d'origine ou créé en modifiant le fichier d'origine.

L'invention est avantageuse en ce que les blocs de données modifiés sont stockés dans le document identitaire durant une phase de personnalisation de ce document identitaire, de sorte à pouvoir être rapidement retrouvés et utilisés lors d'une phase ultérieure de marquage de l'image numérique destinée à être marquée.

La création et l'enregistrement des blocs de données modifiés durant cette phase de personnalisation permet de réduire considérablement la durée de la phase ultérieure de marquage. En effet, le document identitaire ne calcule pas les blocs de données modifiés durant la phase de marquage (ce qui lui prendrait beaucoup de temps étant donné que ses capacités sont limitées), mais, comme décrit plus précisément ensuite, récupère dans la structure de données des blocs de données modifiés et les insère ou les substituent dans le fichier de l'image numérique destinée à être marquée.

Dans un mode de réalisation particulier, le procédé est mis en œuvre par un terminal externe audit document.

Dans un mode de réalisation particulier, le format de l'image numérique d'origine est le format JPEG, JPEG 2000, ou WSQ.

Dans un mode de réalisation particulier, chaque bloc d'origine est obtenu selon un point caractéristique de l'image numérique d'origine.

Dans un mode de réalisation particulier, le fichier de l'image numérique destinée à être marquée et le fichier de l'image numérique d'origine sont identiques.

L'invention concerne en outre un document identitaire électronique apte à marquer une image numérique, comportant :
- le fichier de l'image numérique, identique à un fichier d'origine ou créé en modifiant le fichier d'origine,
- une structure de données comportant pour au moins un bloc de données du fichier d'origine, au moins deux blocs modifiés, chaque bloc modifié étant indexé dans la structure de données par l'emplacement du bloc dans le fichier de l'image numérique et par une entrée différente,
- un module d'obtention d'un marqueur à partir d'une information reçue en provenance d'un terminal de lecture du document,
- un module d'obtention d'au moins un bloc modifié, indexé dans la structure de données par une entrée et un emplacement obtenus à partir du marqueur,
- un module de création d'un fichier marqué en insérant, dans ledit fichier, l'au moins un bloc modifié obtenu, au niveau de l'emplacement obtenu correspondant, ou en substituant, dans ledit fichier, le bloc correspondant à l'emplacement obtenu, par l'au moins un bloc modifié obtenu correspondant,
- un module d'envoi d'une image numérique marquée correspondant au fichier marqué au terminal de lecture.

Ainsi, lorsque le terminal de lecture souhaite accéder à l'image numérique, afin par exemple de réaliser un contrôle d'identité du porteur du document identitaire, le document identitaire marque cette image avant de l'envoyer au terminal de lecture, afin de contrôler ou d'empêcher l'usage qui est fait ultérieurement de cette image par l'opérateur de ce terminal de lecture.

Ainsi, comme expliqué ci-dessus, le document identitaire ne calcule pas les blocs modifiés durant le procédé de marquage ce qui permet de réduire la durée de la phase de marquage.

Ce marquage permet ainsi de décourager la diffusion non autorisée de l'image une fois cette dernière transmise au terminal de lecture, dans la mesure où ces informations permettent d'identifier et donc de trouver le terminal de lecture ou l'opérateur de ce terminal, ou de caractériser la transaction ayant conduit à la transmission de l'image numérique marquée, et partant, d'engager la responsabilité du fautif.

L'invention concerne corrélativement un procédé de marquage d'une image numérique, mis en œuvre par un document identitaire électronique comprenant :
- le fichier de l'image numérique, identique à un fichier d'origine ou créé en modifiant le fichier d'origine,
- une structure de données comportant pour au moins un bloc de données du fichier d'origine, au moins deux blocs modifiés, chaque bloc modifié étant indexé dans la structure de données par l'emplacement du bloc dans le fichier de l'image numérique et par une entrée différente,
le procédé comportant les étapes suivantes :
- obtention d'un marqueur à partir d'une information reçue en provenance d'un terminal de lecture du document,
- obtention d'au moins un bloc modifié, indexé dans la structure de données par une entrée et un emplacement obtenus à partir du marqueur,
- création d'un fichier marqué en insérant, dans ledit fichier, l'au moins un bloc modifié obtenu, au niveau de l'emplacement obtenu correspondant, ou en substituant, dans ledit fichier, l'au moins un bloc correspondant à l'emplacement obtenu, par le bloc modifié obtenu correspondant,
- envoi d'une image numérique marquée correspondant au fichier marqué au terminal de lecture.

Dans un mode de réalisation particulier, le résultat de la substitution ou de l'insertion est invisible à l'œil nu lorsque l'image numérique marquée est affichée sur une interface graphique et/ou imprimée.

Dans un mode de réalisation particulier, le résultat de la substitution ou de l'insertion est visible à l'œil nu lorsque l'image numérique marquée est affichée sur une interface graphique et/ou imprimée.

Dans un mode particulier de réalisation, les différentes étapes du procédé de création sont déterminées par des instructions de programmes informatiques.

En conséquence, l'invention vise aussi un programme sur un support d'informations (ou support d'enregistrement), ce programme étant susceptible d'être mis en œuvre dans un processeur, ce programme comportant des instructions adaptées à la mise en œuvre des étapes du procédé de création tel que défini ci-dessus.

L'invention vise aussi un support d'information (ou support d'enregistrement) lisible par un processeur, et comportant des instructions d'un programme tel que mentionné ci-dessus.

Dans un mode particulier de réalisation, les différentes étapes du procédé de marquage sont déterminées par des instructions de programmes informatiques.

En conséquence, l'invention vise aussi un programme sur un support d'informations (ou support d'enregistrement), ce programme étant susceptible d'être mis en œuvre dans un document identitaire électronique ou plus généralement dans un ordinateur, ce programme comportant des instructions adaptées à la mise en œuvre des étapes du procédé de marquage tel que défini ci-dessus.

L'invention vise aussi un support d'information (ou support d'enregistrement) lisible par un document identitaire électronique ou plus généralement par un ordinateur, et comportant des instructions d'un programme tel que mentionné ci-dessus.

Les programmes mentionnés ci-dessus peuvent utiliser n'importe quel langage de programmation, et être sous la forme de code source, code objet, ou de code intermédiaire entre code source et code objet, tel que dans une forme particulière compilée, ou dans n'importe quelle autre forme souhaitable.

Les supports d'informations mentionnés ci-dessus peuvent être n'importe quelle entité ou dispositif capable de stocker le programme. Par exemple, les supports peuvent comporter un moyen de stockage, tel qu'une mémoire non volatile réinscriptible (de type EEPROM ou Flash NAND par exemple), ou tel qu'une ROM, par exemple un CD ROM ou une ROM de circuit microélectronique, ou encore un moyen d'enregistrement magnétique, par exemple un disque dur.

D'autre part, les supports d'informations peuvent être un support transmissible tel qu'un signal électrique ou optique, qui peut être acheminé via un câble électrique ou optique, par radio ou par d'autres moyens. Les programmes selon l'invention peuvent être en particulier téléchargés sur un réseau de type Internet.

Alternativement, les supports d'informations peuvent être un circuit intégré dans lequel les programmes sont incorporés, le circuit étant adapté pour exécuter ou pour être utilisé dans l'exécution du procédé en question.

### Brève description des dessins

D'autres caractéristiques et avantages de la présente invention ressortiront de la description faite ci-dessous, en référence aux dessins annexés qui en illustrent un exemple de réalisation dépourvu de tout caractère limitatif. Sur les figures :
- la figure 1 représente, de manière schématique, les architectures matérielles d'un document identitaire, d'un terminal de personnalisation, d'un terminal de lecture et d'un terminal d'extraction conformes à un mode de réalisation de l'invention ;
- la figure 2 représente, de manière schématique, un exemple particulier du terminal de personnalisation de la figure 1 ;
- la figure 3 représente, sous forme d'un organigramme, les principales étapes d'un procédé de création d'un document identitaire conforme au mode de réalisation de la figure 1 ;
- la figure 4 représente, de manière schématique, un exemple d'image numérique d'origine et d'image numérique marquée par le document identitaire de la figure 1 ;
- la figure 5 représente, de manière schématique, un exemple particulier du document identitaire de la figure 1 ;
- la figure 6 représente, sous forme d'un organigramme, les principales étapes d'un procédé de marquage conforme au mode de réalisation de la figure 1 ;
- la figure 7 représente, de manière schématique, un exemple de fichier marqué par le document identitaire de la figure 1 ;
- la figure 8 représente, de manière schématique, un exemple particulier du terminal d'extraction de la figure 1 ;
- la figure 9 représente, sous forme d'un organigramme, les principales étapes d'un procédé d'extraction conforme au mode de réalisation de la figure 1.

### Description détaillée de plusieurs modes de réalisation

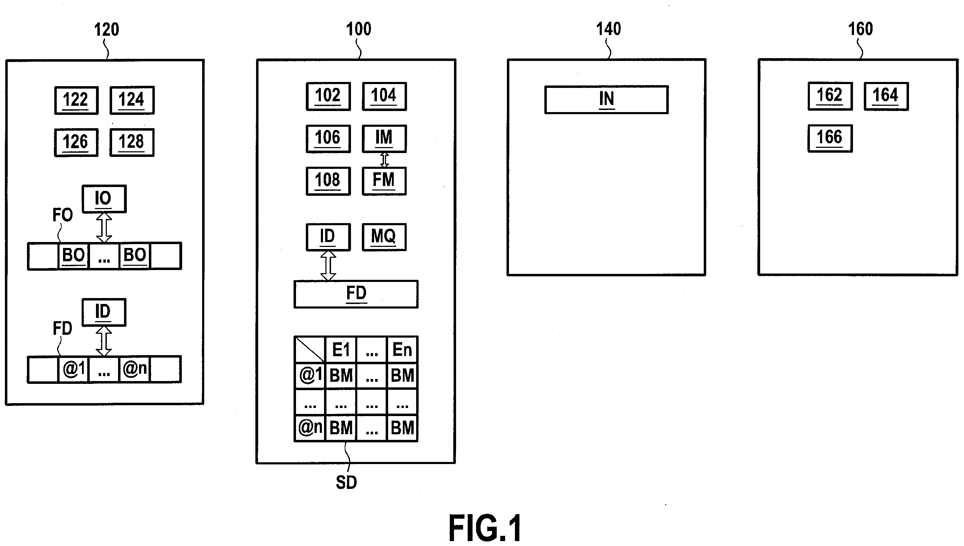

La **figure 1** représente, de manière schématique, un document identitaire 100, un terminal de personnalisation 120 configuré pour personnaliser le document identitaire 100, un terminal de lecture 140 configuré pour lire des données numériques du document identitaire 100, et un terminal d'extraction 160 de marqueurs.

Le terminal de personnalisation 120 comporte un module d'obtention 122 d'un fichier d'origine FO d'une image numérique d'origine IO et un module d'obtention 124 d'au moins un bloc de données BO de ce fichier d'origine FO, dit bloc d'origine BO.

Le terminal de personnalisation 120 comporte en outre un module de création 126 pouvant créer, pour chaque bloc d'origine BO, au moins deux bloc modifiés BM.

En outre, le terminal de personnalisation 120 comporte un module d'enregistrement 128 pouvant enregistrer, pour chaque bloc d'origine BO, chaque bloc modifié BM dans une structure de données SD du document identitaire 100, chaque bloc modifié BM étant indexé dans la structure de données SD par l'emplacement @1-@n du bloc d'origine BO dans un fichier FD d'une image numérique destinée à être marquée ID (dit fichier destiné à être marqué FD), et par une entrée différente E1-En.

Le fichier d'origine FO et le fichier destiné à être marqué FD peuvent être identiques.

En variante, le fichier destiné à être marqué FD est créé en modifiant le fichier d'origine FO, par exemple en retirant les blocs d'origine BO pour lesquels des blocs modifiés BM ont été créés puis enregistrés dans la structure de données SD.

Ainsi, les blocs de données modifiés BM sont stockés dans le document identitaire 100 durant une phase de personnalisation de ce document identitaire 100, de sorte à pouvoir être rapidement retrouvés et utilisés lors d'une phase ultérieure de marquage de l'image numérique destinée à être marquée ID.

La création et l'enregistrement des blocs de données modifiés BM durant la phase de personnalisation permet de réduire considérablement la durée de la phase de marquage. En effet, le document identitaire 100 ne calcule pas les blocs de données modifiés durant la phase de marquage (ce qui lui prendrait beaucoup de temps étant donné que ses capacités sont limitées), mais, comme décrit plus précisément ensuite, récupère dans la structure de données SD des blocs de données modifiés BM et les insère ou les substitue dans le fichier destiné à être marqué FD.

En variante, le document identitaire 100 comporte le module d'obtention 122 d'un fichier d'origine, le module d'obtention 124 d'au moins un bloc de données, le module de création 126 et le module d'enregistrement 128 à la place du terminal de personnalisation 120. Le document identitaire 100 crée alors les blocs de données modifiés BM pendant une phase de personnalisation antérieure à une phase de marquage.

Lorsque le terminal de lecture 140 souhaite accéder à l'image numérique destinée à être marquée ID, afin par exemple de réaliser un contrôle d'identité du porteur du document identitaire 100, le document identitaire 100 marque cette image ID avant de l'envoyer au terminal de lecture 140, afin de contrôler ou d'empêcher l'usage qui est fait ultérieurement de cette image ID par l'opérateur de ce terminal de lecture 140.

A cette fin, le document identitaire 100 comporte, après la phase de personnalisation, le fichier destiné à être marqué FD et la structure de données SD (le fichier destiné à être marqué FD pouvant être le fichier d'origine FO).

En outre, le document identitaire 100 comporte un module d'obtention 102 d'un marqueur MQ à partir d'une information IN reçue en provenance du terminal de lecture 140, par exemple envoyée lorsque ce terminal de lecture 140 envoie une requête de lecture du fichier destiné à être marqué FD.

L'information IN envoyée par le terminal de lecture 140 est par exemple un identifiant du terminal de lecture 140, un identifiant de l'opérateur du terminal de lecture 140, ou toute autre information pouvant caractériser la transaction conduisant à la transmission d'une image numérique marquée IM entre le document identitaire 100 et le terminal de lecture 140. Dans un autre exemple, l'information IN comprend plusieurs éléments cités ci-dessus.

De plus, le document identitaire 100 comprend un module d'obtention 104 d'au moins un bloc modifié BM, indexé dans la structure de données SD par une entrée E1-En et un emplacement @1-@n correspondants, obtenus à partir dudit marqueur MQ.

En outre, le document identitaire 100 comprend un module de création 106 d'un fichier marqué FM en insérant chaque bloc modifié BM au niveau dudit emplacement @1-@n correspondant obtenu dans le fichier destiné à être marqué FD, notamment lorsque le fichier destiné à être marqué est créé en retirant les blocs de données d'origine BO pour lesquels des blocs modifiés BM ont été créés. En variante, le module de création 106 substitue chaque bloc du fichier destiné à être marqué FD, correspondant à chaque emplacement @1-@n obtenu, par ledit bloc modifié BM correspondant dans ledit fichier FD.

Le document identitaire 100 comporte aussi un module d'envoi 108 d'une image numérique marquée IM correspondant audit fichier marqué FM au terminal de lecture 140.

Ainsi, comme expliqué ci-dessus, le document identitaire 100 ne calcule pas les blocs modifiés BM durant la phase de marquage ce qui permet de réduire la durée de la phase de marquage.

En outre, l'image numérique marquée IM envoyée au terminal de lecture 140 est marquée à partir d'informations relatives à ce terminal de lecture 140, à l'opérateur de ce terminal 140, ou à la transaction conduisant à la transmission de l'image numérique marquée IM entre le document identitaire 100 et le terminal de lecture 140. Ce marquage permet ainsi de décourager la diffusion non autorisée de l'image une fois cette dernière transmise au terminal de lecture 140, dans la mesure où ces informations permettent d'identifier et donc de trouver le terminal de lecture 140 ou l'opérateur de ce terminal 140, ou de caractériser la transaction ayant conduit à la transmission de l'image numérique marquée IM, et partant, d'engager la responsabilité du fautif.

Le terminal d'extraction 160 de marqueur est apte à extraire le marqueur MQ à partir de l'image numérique marquée IM.

Si l'image marquée IM est transmise par le terminal de lecture 140 à un autre terminal, il est ensuite possible d'identifier, à partir du marqueur MQ extrait, le terminal de lecture 140, son opérateur ou de caractériser la transaction ayant conduit à la transmission de l'image numérique marquée IM.

Ainsi, dans le cas où cette transmission n'est pas autorisée, il est possible de mettre en cause la responsabilité du fautif.

Le terminal d'extraction 160 de marqueurs comporte un module de détermination 162 de l'emplacement d'au moins un bloc de données modifié BM dans le fichier FM de l'image numérique marquée IM.

Le terminal d'extraction 160 comporte en outre un module d'obtention 164 d'au moins une entrée E1-En de la structure de donnée SD correspondant audit au moins un bloc de données.

De plus, le terminal d'extraction 160 comporte un module de constitution 166 du marqueur MQ à partir de l'au moins une entrée E1-En obtenue.

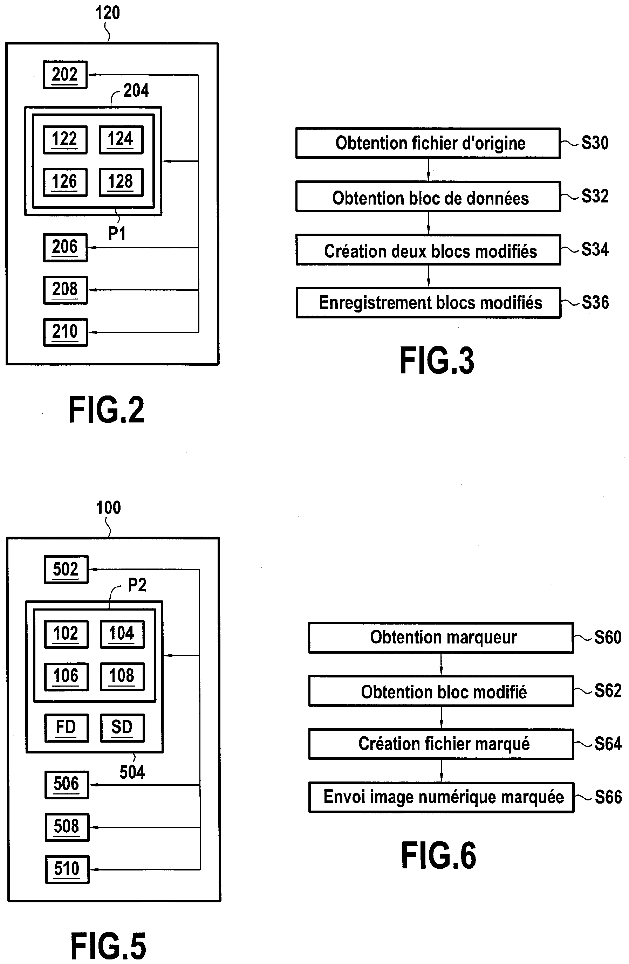

La **figure 2** représente un exemple particulier du terminal de personnalisation 120 décrit généralement en référence à la figure 1.

Le terminal de personnalisation 120 est par exemple un terminal de création de documents identitaires chez un fabriquant de documents identitaires, ou un terminal de contrôle dans un aéroport.

Le terminal de personnalisation 120 présente l'architecture conventionnelle d'un ordinateur. Le terminal de personnalisation 120 comporte notamment un processeur 202, une mémoire morte 204 (de type ROM), une mémoire non volatile réinscriptible 206 (de type EEPROM ou Flash NAND par exemple), une mémoire volatile réinscriptible 208 (de type RAM), et une interface d'entrées et sorties 210.

Dans cet exemple, la mémoire morte 204 constitue un support d'informations (ou d'enregistrement) conforme à un mode de réalisation particulier de l'invention. Dans la mémoire morte 204 est stocké un premier programme d'ordinateur P1 permettant au terminal de personnalisation 120 de mettre en œuvre un procédé de création d'un document identitaire électronique conforme à un mode de réalisation particulier de l'invention (cf. figure 3).

Ce premier programme d'ordinateur P1 définit de façon équivalente des modules (logiciels) fonctionnels du terminal de personnalisation 120, tels que notamment le module d'obtention 122 d'un fichier d'origine, le module d'obtention 124 d'au moins un bloc de données, le module de création 126 et le module d'enregistrement 128.

La **figure 3** représente un procédé de création d'un document identitaire selon un mode particulier de réalisation, mis en œuvre par le terminal de personnalisation 120 exécutant le premier programme d'ordinateur P1 enregistré dans la mémoire morte 204.

Au cours d'une étape S30, le module d'obtention 122 d'un fichier d'origine obtient le fichier d'origine FO de l'image numérique d'origine IO via l'interface d'entrées et sorties 210.

L'image numérique d'origine IO est par exemple reçue du document identitaire 100, notamment lorsque le terminal de personnalisation 210 est un terminal de contrôle. En variante, l'image numérique d'origine IO est reçue d'un autre terminal ou stockée dans la mémoire du terminal de personnalisation 120.

Dans un exemple, l'image numérique d'origine IO est compressée. Le format de l'image numérique d'origine IO peut être le format JPEG, JPEG 2000 ou WSQ.

L'étape S30 est suivie d'une étape S32 d'obtention, par le module d'obtention 124, d'au moins un bloc de données dudit fichier d'origine FO, dit bloc d'origine BO.

Ce bloc d'origine BO est par exemple obtenu en fonction d'un élément représenté dans l'image numérique d'origine IO. Par exemple, lorsque cette image numérique IO est une photo d'identité, l'élément représenté peut être un œil, un nez etc. Le bloc d'origine BO obtenu est alors un bloc de données correspondant à une zone de l'image numérique d'origine IO comprenant cet élément.

En variante, le bloc d'origine BO est obtenu aléatoirement. Dans une autre variante, le bloc d'origine BO est obtenu selon une clé secrète.

Ainsi, les blocs d'origine BO obtenus pour le fichier d'origine FO peuvent avoir des emplacements différents des emplacements de blocs d'origine obtenus pour un autre fichier.

Cette étape S32 peut être réitérée selon les besoins. Il est ainsi possible d'obtenir plusieurs blocs d'origine BO à partir du fichier d'origine FO de l'image numérique d'origine IO.

Lorsque plusieurs blocs d'origine BO sont obtenus par les moyens d'obtention 124, tous les blocs d'origine BO peuvent être obtenus selon la même manière d'obtention ou selon plusieurs des manières d'obtention décrites ci-dessus.

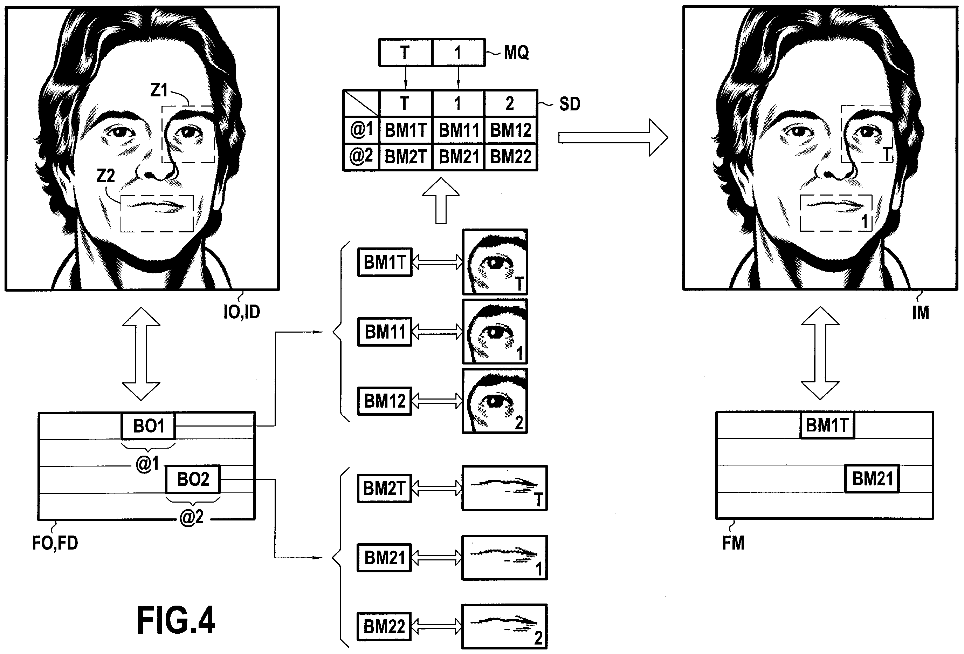

La **figure 4** représente un exemple de l'image numérique d'origine IO et du fichier d'origine FO. L'image IO est une photographie d'identité comportant un œil et une bouche. En outre, le fichier d'origine FO comporte deux blocs d'origine BO1 et BO2. Le premier bloc d'origine BO1 est obtenu en fonction de l'œil de la photographie et le deuxième bloc d'origine est obtenu en fonction de la bouche de la photographie. Le premier bloc d'origine BO1 correspond ainsi à la zone Z1 comportant ledit œil et le deuxième bloc d'origine BO2 correspond à la zone Z2 comportant la bouche.

Pour chaque bloc d'origine BO obtenu par le module d'obtention 124, le module de création 126 crée (S34) au moins deux blocs modifiés BM.

Chaque bloc modifié BM peut être créé à partir du bloc d'origine BO et afficher au moins une modification visible à l'œil nu lorsque le bloc est affiché sur une interface graphique et/ou imprimé.

Dans l'exemple de la figure 4, trois blocs modifiés BM1T, BM11 et BM12 sont créés pour le premier bloc d'origine BO1. De même, pour le deuxième bloc d'origine BO2, trois blocs modifiés BM2T, BM21 et BM22 sont créés. Comme le montre la figure 4, un caractère tel qu'une lettre ou un chiffre s'affiche pour chaque bloc modifié BM1T, BM11, BM12, BM2T, BM21 et BM22.

En variante, la modification n'est pas visible à l'œil nu. Le bloc modifié BM peut par exemple être créé en modifiant au moins un bit de poids faible du bloc d'origine BO.

Dans un exemple ou le format de l'image numérique d'origine IO est le format JPEG, chaque bloc modifié BM peut être obtenu en utilisant l'algorithme de Koch et Zhao, au regard de l'information à cacher. Plus précisément, pour chaque bloc d'origine BO, le module de création 126 décompresse (décode et dé-quantifie) ce bloc d'origine BO, modifie le bloc obtenu en utilisant l'algorithme de Koch et Zhao afin d'obtenir au moins un bloc modifié BM, puis le compresse (quantification et codage).

Au format JPEG, les blocs sont des portions de 8x8 pixels dans l'image qui ont subis une transformation colorimétrique, une transformation dans le domaine fréquentiel (grâce à une transformée en cosinus discrète), puis une quantification et un codage. L'algorithme de Koch et Zhao remonte jusqu'à l'information fréquentielle en décodant et dé-quantifiant les blocs qui se trouvent dans le fichier JPEG, il modifie ensuite les valeurs des fréquences moyennes (pour rendre invisible l'information), puis quantifie et recode les blocs.

Pour chaque bloc d'origine BO, chaque bloc modifié BM est ensuite enregistré dans la structure de données SD dans une étape S36 (cf. figure 3). Au cours de cette étape S36, chaque bloc modifié BM est indexé dans la structure de donnée SD par l'emplacement @1-@n du bloc d'origine BO dans le fichier destiné à être marqué FD de l'image numérique destinée à être marquée ID et par une entrée différente E1-En.

Comme décrit précédemment, le fichier d'origine FO et le fichier destiné à être marqué FD peuvent être identiques. L'emplacement @1-@n de chaque bloc d'origine BO dans le fichier destiné à être marqué FD correspond alors à l'emplacement du bloc d'origine BO dans le fichier d'origine FO. En variante, le fichier destiné à être marqué FD est créé en modifiant le fichier d'origine FO, par exemple en retirant les blocs de données d'origine BO pour lesquels des blocs modifiés BM ont été créés puis enregistrés dans la structure de donnée SD. L'adresse de départ de l'emplacement @1-@n de chaque bloc d'origine BO dans le fichier destiné à être marqué FD correspond alors à l'adresse de départ de l'emplacement de ce bloc d'origine BO dans le fichier d'origine FO à laquelle est enlevée la taille des blocs d'origine précédant ce bloc d'origine BO dans le fichier d'origine FO. Par exemple, si le fichier d'origine FO comporte un premier bloc d'origine BOa, un deuxième bloc d'origine BOb et un troisième bloc d'origine BOc, l'adresse de départ de l'emplacement @a du premier bloc d'origine BOa est l'adresse de départ de l'emplacement de ce premier bloc d'origine BOa dans le fichier d'origine, l'adresse de départ de l'emplacement @b du deuxième bloc d'origine BOb est l'adresse de départ de l'emplacement de ce deuxième bloc d'origine BOb dans le fichier d'origine à laquelle on enlève la taille du premier bloc BOa, et l'adresse de départ de l'emplacement @c du troisième bloc d'origine BOc est l'adresse de départ de l'emplacement de ce troisième bloc d'origine BOc dans le fichier d'origine à laquelle on enlève la taille du premier bloc BOa et la taille du deuxième bloc BOb.

Dans l'exemple de la figure 4, le fichier d'origine FO et le fichier destiné à être marqué FD sont identiques. Chaque bloc modifié BM1T, BM11, BM12, BM2T, BM21 et BM22 est indexé dans la structure de donnée SD par l'emplacement @1 ou @2 du bloc d'origine BO1 ou BO2 dans le fichier destiné à être marqué FD et par une entrée différente T, 1, ou 2.

En variante, le terminal de personnalisation 120 vérifie que le document identitaire 100 est apte à marquer une image numérique avant de réaliser l'étape S36 d'enregistrement (cf. figure 3). Cette étape de vérification peut être réalisée par un envoi d'une requête au document identitaire 100, par reconnaissance visuelle du document identitaire 100, ou par lecture d'un tag apposé sur ce document identitaire 100.

En variante, seule une partie des blocs modifiés BM est enregistrée dans la structure de données SD. Les blocs modifiés BM enregistrés sont choisis en fonction de données statistiques et/ou d'informations portant sur le document identitaire 100 ou sur le propriétaire du document identitaire 100. Ces informations peuvent être le pays émetteur du document identitaire, le type de document identitaire, la nationalité du propriétaire et/ou l'âge du propriétaire.

Le procédé de création selon l'invention peut être mis en œuvre pendant une phase de personnalisation durant laquelle le fichier FD est enregistré dans le document identitaire 100, notamment lorsque le terminal de personnalisation 120 est un terminal de création de documents identitaires chez un fabriquant de documents identitaires. En variante, le procédé de création selon l'invention est mis en œuvre pendant une phase de personnalisation différente de la phase durant laquelle le fichier FD est enregistré, notamment lorsque le terminal de personnalisation 120 est un terminal de contrôle dans un aéroport. Par exemple, dans le cas d'une demande de visa pour un Etat donné, le terminal de personnalisation 120 obtient et enregistre les blocs modifiés BM nécessaires.

En variante, le procédé de création d'un document identitaire est mis en œuvre par le document identitaire 100 et non par le terminal de personnalisation 120. L'étape de vérification de la capacité du document identitaire 100 à marquer une image numérique n'est alors pas réalisée.

La **figure 5** représente un exemple particulier document identitaire électronique 100 après la phase de personnalisation, décrit généralement en référence à la figure 1.

Le document identitaire 100 présente l'architecture conventionnelle d'un ordinateur, et comporte une puce comprenant notamment un processeur 502, une mémoire morte 504 (de type ROM), une mémoire non volatile réinscriptible 506 (de type EEPROM ou Flash NAND par exemple), une mémoire volatile réinscriptible 508 (de type RAM), et une interface d'entrées et sorties 510.

Dans cet exemple, la mémoire morte 504 constitue un support d'informations (ou d'enregistrement) conforme à un mode de réalisation particulier de l'invention. Dans la mémoire morte 504 est stocké un deuxième programme d'ordinateur P2 permettant au document identitaire 100 de mettre en œuvre un procédé de marquage d'une image numérique conforme à un mode de réalisation particulier de l'invention (cf. figure 6).

Ce deuxième programme d'ordinateur P2 définit de façon équivalente des modules (logiciels) fonctionnels du document identitaire 100, tels que notamment le module d'obtention 102 d'un marqueur, le module d'obtention 104 d'au moins un bloc modifié, le module de création 106 d'un fichier marqué et le module d'envoi 108.

Le document identitaire 100 comporte en outre la structure de données SD et le fichier destiné à être marqué FD (le fichier destiné à être marqué FD pouvant être le fichier d'origine FO non modifié), par exemple stockés dans la mémoire morte 504.

La **figure 6** représente un procédé de marquage d'une image numérique selon un mode particulier de réalisation, mis en œuvre par le document identitaire 100 exécutant le deuxième programme d'ordinateur P2 enregistré dans la mémoire morte 504.

Au cours d'une étape S60, le module d'obtention 102 d'un marqueur obtient un marqueur MQ à partir d'une information IN reçue en provenance du terminal de lecture 140. Cette information IN est par exemple envoyée par le terminal de lecture 140 lorsque ce terminal de lecture 140 envoie une requête de lecture du fichier destiné à être marqué FD.

L'information IN envoyée par le terminal de lecture 140 est par exemple un identifiant du terminal de lecture 140, un identifiant de l'opérateur du terminal de lecture 140, ou toute autre information pouvant caractériser la transaction conduisant à la transmission d'une image numérique marquée IM entre le document identitaire 100 et le terminal de lecture 140. Dans un autre exemple, l'information IN comprend plusieurs éléments cités ci-dessus.

Le marqueur MQ est par exemple une succession de caractères tels que des chiffres et/ou des lettres. Dans un exemple, le marqueur MQ et l'information IN reçue sont confondus. Dans un autre exemple, le marqueur MQ comprend une partie de l'information IN reçue.

Le marqueur MQ et/ou l'information IN peut en outre être encrypté avec une clé afin d'assurer sa confidentialité et/ou contenir une protection en authenticité et/ou intégrité par une signature ou un MAC (« Message Authentication Code » en terminologie anglo-saxonne). Le marqueur MQ et/ou l'information IN peut aussi contenir des données redondantes.

Dans l'exemple de la figure 4, le marqueur MQ comprend deux caractères, la lettre « T » et le chiffre « 1 ».

Au cours d'une étape S62 (cf. figure 6), le module d'obtention 104 d'au moins un bloc modifié BM obtient au moins un bloc modifié BM, indexé dans la structure de données SD par une entrée E1-En et un emplacement @1-@n correspondants, obtenus à partir dudit marqueur MQ.

Dans l'exemple de la figure 4, l'entrée indexant le premier bloc modifié BM1T obtenu est obtenue à partir du premier caractère du marqueur MQ (la lettre «T»). En outre, l'entrée indexant le deuxième bloc modifié BM21 obtenu est obtenue à partir du deuxième caractère du marqueur MQ (le chiffre « 1 »). De plus, les emplacements indexant les blocs modifiés BM1T et BM21 sont obtenus à partir de la position des caractères du marqueur MQ. Ainsi, la lettre « T », en première position dans le marqueur MQ, indique le premier emplacement @1 de la structure de donnée SD. En outre, le chiffre « 1 », en deuxième position dans le marqueur MQ, indique le deuxième emplacement @2 de la structure de donnée SD.

A partir de l'entrée T et de l'emplacement @1, le module d'obtention 104 obtient le premier bloc modifié BM1T et, à partir de l'entrée 1 et de l'emplacement @2, le module d'obtention 104 obtient le deuxième bloc modifié BM21.

Le module de création 106 d'un fichier marqué FM crée un fichier marqué (S64) en insérant chaque bloc modifié BM au niveau dudit emplacement @1-@n obtenu correspondant dans le fichier destiné à être marqué FD.

En variante, le fichier marqué FM est créé en substituant chaque bloc du fichier destiné à être marqué FD, correspondant à chaque emplacement @1-@n obtenu, par le bloc modifié BM correspondant dans le fichier destiné à être marqué FD.

Dans un exemple, le résultat de la substitution ou de l'insertion est invisible à l'œil nu lorsque l'image numérique marquée IM est affichée sur une interface graphique et/ou imprimée. Cela se produit par exemple lorsque le bloc modifié BM est créé en modifiant le bit de poids faible du bloc d'origine.

Dans un autre exemple, le résultat de la substitution ou de l'insertion est visible à l'œil nu lorsque l'image numérique marquée IM est affichée sur une interface graphique et/ou imprimée.

Dans l'exemple de la figure 4, le premier bloc modifié BM1T se substitue au premier bloc d'origine BO1 et le deuxième bloc modifié BM21 se substitue au deuxième bloc d'origine BO2.

Le résultat de ces substitutions sont visibles à l'œil nu lorsque l'image marquée IM est affichée. En effet, l'image marquée IM comporte la lettre « T » en dessous d'un œil et le chiffre « 1 » en dessous de la bouche.

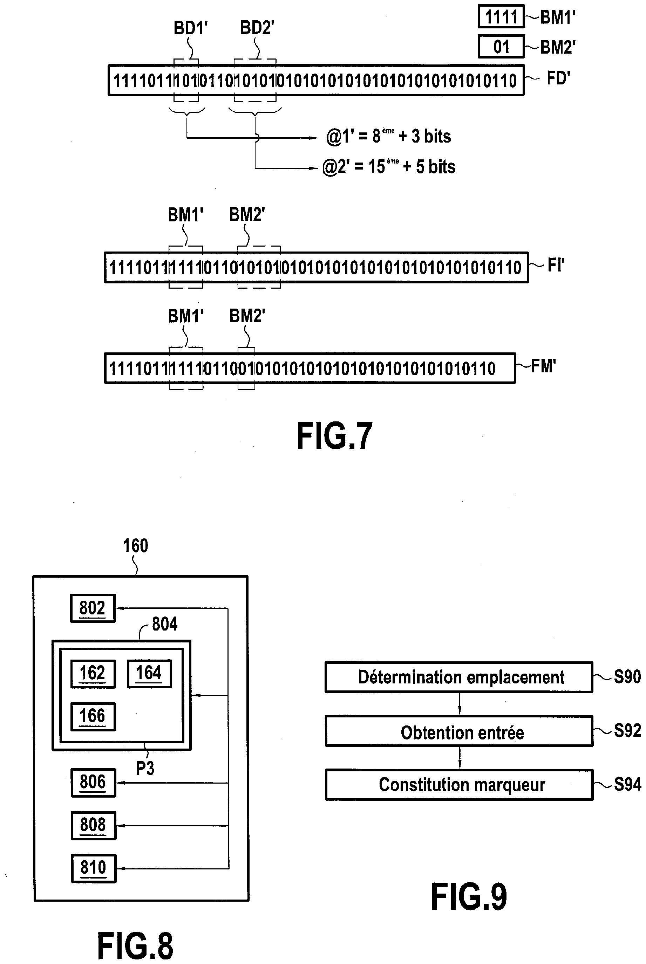

La **figure 7** représente un autre exemple de substitutions dans un fichier destiné à être marqué FD' comportant une suite de bits prenant comme valeur « 0 » ou « 1 ». Dans cet exemple, l'emplacement @1' d'un premier bloc BD1' dudit fichier FD' est défini par une adresse de départ correspondant au huitième bit dudit fichier FD' et une taille de 3 bits. En outre, un premier bloc modifié BM1' comporte 4 bits prenants la valeur « 1 ». Les valeurs « 101 » du premier bloc BD1' sont ainsi remplacées par les valeurs « 1111 » du premier bloc modifié BM1' (voir fichier intermédiaire FI').

En outre, dans cet exemple, l'emplacement @2' d'un deuxième bloc BD2' du fichier destiné à être marqué FD' est défini par une adresse de départ correspondant quinzième bit dudit fichier FD' et une taille de 5 bits. En outre, un deuxième bloc modifié BM2' comporte 2 bits, le premier prenant la valeur « 0 » et le deuxième prenant la valeur « 1 ». La première substitution ayant remplacé un bloc de 3 bits par un bloc de 4 bits, l'emplacement du deuxième bloc BD2' dans le fichier intermédiaire FI' est défini par le seizième bit dudit fichier FI' et la taille de 5 bits. Les valeurs « 10101 » du deuxième bloc BD2' sont ainsi remplacées par les valeurs « 01 » du deuxième bloc modifié BM2' afin de créer le fichier marqué FM'.

Au cours d'une étape S66 (cf. figure 6), le module d'envoi 108 envoie l'image numérique marquée IM correspondant audit fichier marqué FM au terminal de lecture 140.

La création et l'enregistrement des blocs modifiés BM pendant une phase de personnalisation permettent de réduire la durée de la phase de marquage. De plus, le procédé de marquage selon l'invention est simple à mettre en œuvre.

En outre, la taille totale des blocs modifiés BM obtenus avec l'algorithme de Koch et Zhao et stockés dans la mémoire du document identitaire 100, pour pouvoir être ensuite utilisés pour marquer une image à partir d'un marqueur MQ codé sur 16 octets est d'environ 4,45 kilooctets pour une image numérique d'origine FO (photographie numérique) au format JPEG et conforme à la norme de l'organisation internationale d'aviation civile (ICAO pour « International Civil Aviation Organisation » en terminologie anglo-saxonne), de 30 kilooctets et de dimension de 420 pixels x 525 pixels.

Or, une photographie numérique de 24 kilooctets permet de réaliser dans de bonnes conditions une reconnaissance faciale. En outre, pour un usage normal, une photographie numérique de 14 kilooctets à 16 kilooctets est suffisante, et une photographie numérique de 9 kilooctets permet d'obtenir un résultat acceptable.

Ainsi, la taille totale des blocs modifiés BM stockés en mémoire du document identitaire 100 est raisonnable.

De plus, l'invention permet de ne pas marquer toute l'image numérique destinée à être marquée ID.

L'étape S64 de création du fichier marqué FM et l'étape S66 d'envoi peuvent être réalisées en parallèle, le fichier marqué FM étant envoyé au fur et à mesure de sa création. En variante l'étape S66 d'envoi est réalisée après l'étape de création S64. Le fichier marqué FM créé est alors enregistré en mémoire du document identitaire 100 avant d'être envoyé.

La **figure 8** représente un exemple particulier du terminal d'extraction 160 de marqueurs décrit généralement en référence à la figure 1.

Le terminal d'extraction 160 présente l'architecture conventionnelle d'un ordinateur. Le terminal d'extraction 160 comporte notamment un processeur 802, une mémoire morte 804 (de type ROM), une mémoire non volatile réinscriptible 806 (de type EEPROM ou Flash NAND par exemple), une mémoire volatile réinscriptible 808 (de type RAM), et une interface d'entrées et sorties 810.

Dans cet exemple, la mémoire morte 804 constitue un support d'informations (ou d'enregistrement) conforme à un mode de réalisation particulier de l'invention. Dans la mémoire morte 804 est stocké un troisième programme d'ordinateur P3 permettant au terminal d'extraction 160 de mettre en œuvre un procédé d'extraction d'un marqueur conforme à un mode de réalisation particulier de l'invention (cf. figure 9).

Ce troisième programme d'ordinateur P3 définit de façon équivalente des modules (logiciels) fonctionnels du terminal d'extraction 160, tels que notamment le module de détermination 162, le module d'obtention 164 de l'entrée E1-En et le module de constitution 166 du marqueur.

La **figure 9** représente un procédé d'extraction d'un marqueur selon un mode particulier de réalisation, mis en œuvre par le terminal d'extraction 160 exécutant le troisième programme d'ordinateur P3 enregistré dans la mémoire morte 804.

Au cours d'une étape S90, le module de détermination 162 détermine l'emplacement @1-@n d'un bloc modifié BM dans un fichier de l'image numérique marquée IM. Dans un exemple, cet emplacement est déterminé à partir d'une clé.

Au cours d'une étape S92, le module d'obtention 164 obtient une entrée E1-En correspondant à un index du bloc modifié BM dans la structure de données SD.

Au cours d'une étape S94, le module de constitution 166 constitue le marqueur MQ à partir de l'entrée obtenue.

Les étapes S90 et S92 peuvent être réitérés afin d'obtenir plusieurs couples d'emplacement @1-@n et d'entrées E1-En. Le marqueur MQ est alors constitué à partir de la pluralité d'entrées E1-En obtenues.

## Revendications

1. Procédé de création d'un document identitaire électronique (100), ledit procédé comportant les étapes suivantes :
- obtention (S30) du fichier (FO) d'une image numérique d'origine (IO),
- obtention (S32) d'au moins un bloc de données (BO) dudit fichier (FO), dit bloc d'origine (BO),
- pour chaque bloc d'origine (BO) :
- création (S34) d'au moins deux blocs modifiés (BM),
- enregistrement (S36) de chaque bloc modifié (BM) dans une structure de données (SD) dudit document (100), chaque bloc modifié (BM) étant indexé dans ladite structure de données (SD) par une entrée (E1-En) différente et par l'emplacement (@1-@n) dudit bloc d'origine (BO) dans le fichier (FD) d'une image numérique destinée à être marquée (ID) en utilisant au moins un bloc modifié (BM) indexé dans la structure de données CSD), l'entrée et l'emplacement dudit bloc modifié (BM) étant obtenus à partir d'un marqueur (MQ) obtenu à partir d'une information (IN) reçue en provenance d'un terminal de lecture (140) dudit document,
dans lequel ledit fichier (FD) d'une image numérique destinée à être marquée (ID) est identique à un fichier d'origine (FO) ou créé en retirant les blocs de données d'origine (BO) du fichier d'origine (FO).

2. Procédé selon la revendication 1, mis en œuvre par un terminal externe (120) audit document (100).

3. Procédé selon la revendication 2, dans lequel le format de l'image numérique d'origine (IO) est le format JPEG, JPEG 2000, ou WSQ.

4. Procédé selon l'une quelconque des revendications 1 à 3, dans lequel chaque bloc d'origine (BO) est obtenu selon un point caractéristique de l'image numérique d'origine (IO).

5. Programme (P1) comportant des instructions pour l'exécution des étapes d'un procédé de création selon l'une quelconque des revendications 1 à 4 lorsque ledit programme (P1) est exécuté par un processeur.

6. Support d'enregistrement (204) lisible par un processeur sur lequel est enregistré un programme (P1) comprenant des instructions pour l'exécution des étapes d'un procédé de création selon l'une quelconque des revendications 1 à 4.

7. Document identitaire électronique (100) apte à marquer une image numérique (ID), comportant :
- le fichier (FD) de ladite image numérique (ID), identique à un fichier d'origine (FO) ou créé en retirant les blocs de données d'origine (BO) du fichier d'origine (FO),
- une structure de données (SD) comportant pour au moins un bloc de données du fichier d'origine (FO), au moins deux blocs modifiés (BM), chaque bloc modifié (BM) étant indexé dans ladite structure de données (SD) par l'emplacement (@1-@n) dudit bloc dans le fichier (FD) de ladite image numérique (ID) et par une entrée différente (E1-En),
- un module d'obtention (102) d'un marqueur (MQ) à partir d'une information (IN) reçue en provenance d'un terminal de lecture (140) dudit document,
- un module d'obtention (104) d'au moins un bloc modifié (BM), indexé dans la structure de données (SD) par une entrée (E1-En) et un emplacement (@1-@n) obtenus à partir dudit marqueur (MQ),
- un module de création (106) d'un fichier marqué (FM) en insérant, dans ledit fichier (FD), ledit au moins un bloc modifié (BM) obtenu, au niveau dudit emplacement (@1-@n) obtenu correspondant, ou en substituant, dans ledit fichier (FD), le bloc correspondant audit emplacement (@1-@n) obtenu, par ledit au moins un bloc modifié (BM) obtenu correspondant,
- un module d'envoi (108) d'une image numérique marquée (IM) correspondant audit fichier marqué (FM) au terminal de lecture (140).

8. Procédé de marquage d'une image numérique (ID), mis en œuvre par un document identitaire électronique (100) comprenant :
- le fichier (FD) de ladite image numérique (ID), identique à un fichier d'origine (FO) ou créé en retirant les blocs de données d'origine (BO) du fichier d'origine (FO),
- une structure de données (SD) comportant pour au moins un bloc de données du fichier d'origine (FO), au moins deux blocs modifiés (BM), chaque bloc modifié (BM) étant indexé dans ladite structure de données (SD) par l'emplacement (@1-@n) dudit bloc dans le fichier (FD) de ladite image numérique (ID) et par une entrée différente (E1-En), ledit procédé comportant les étapes suivantes :
- obtention (S60) d'un marqueur (MQ) à partir d'une information (IN) reçue en provenance d'un terminal de lecture (140) dudit document,
- obtention (S62) d'au moins un bloc modifié (BM), indexé dans la structure de données (SD) par une entrée (E1-En) et un emplacement (@1-@n) obtenus à partir dudit marqueur (MQ),
- création (S64) d'un fichier marqué (FM) en insérant, dans ledit fichier (FD), ledit au moins un bloc modifié (BM) obtenu, au niveau dudit emplacement (@1-@n) obtenu correspondant, ou en substituant, dans ledit fichier (FD), le bloc correspondant audit emplacement (@1-@n) obtenu, par ledit au moins un bloc modifié (BM) obtenu correspondant,
- envoi (S66) d'une image numérique marquée (IM) correspondant audit fichier marqué (FM) au terminal de lecture (140).

9. Procédé selon la revendication 8, dans lequel le résultat de la substitution ou de l'insertion est invisible à l'œil nu lorsque l'image numérique marquée (IM) est affichée sur une interface graphique et/ou imprimée.

10. Procédé selon la revendication 8, dans lequel le résultat de la substitution ou de l'insertion est visible à l'œil nu lorsque l'image numérique marquée (IM) est affichée sur une interface graphique et/ou imprimée.

11. Programme (P2) comportant des instructions pour l'exécution des étapes d'un procédé de marquage selon l'une quelconque des revendications 8 à 10 lorsque ledit programme (P2) est exécuté par un document identitaire électronique (100).

12. Support d'enregistrement (504) lisible par un document identitaire électronique (100) sur lequel est enregistré un programme (P2) comprenant des instructions pour l'exécution des étapes d'un procédé de marquage selon l'une quelconque des revendications 8 à 10.

## Patentansprüche

1. Verfahren zum Erstellen eines elektronischen Identitätsdokuments (100), wobei das Verfahren die folgenden Schritte aufweist:
- Erhalten (S30) der Datei (FO) eines digitalen Originalbildes (IO),
- Erhalten (S32) mindestens eines Datenblocks (BO) der Datei (FO), der Originalblock (BO) genannt wird,
- für jeden Originalblock (BO):
- Erstellen (S34) von mindestens zwei modifizierten Blöcken (BM),
- Aufzeichnen (S36) jedes modifizierten Blocks (BM) in einer Datenstruktur (SD) des Dokuments (100), wobei jeder modifizierte Block (BM) in der Datenstruktur (SD) durch einen unterschiedlichen Eintrag (E1-En) und durch die Position (@1- @n) des Originalblocks (BO) in der Datei (FD) eines digitalen Bildes indiziert wird, das dazu bestimmt ist, markiert zu werden (ID), indem mindestens ein modifizierter Block (BM) verwendet wird, der in der Datenstruktur (SD) indiziert wird, wobei der Eintrag und die Position des modifizierten Blocks (BM) ausgehend von einem Marker (MQ) erhalten werden, der ausgehend von einer Information (IN) erhalten wird, die von einem Leseendgerät (140) des Dokuments empfangen wird, wobei die Datei (FD) eines digitalen Bildes, das dazu bestimmt ist, markiert zu werden (ID), mit einer Originaldatei (FO) identisch ist oder erstellt wird, indem die Originaldatenblöcke (BO) von der Originaldatei (FO) entfernt werden.

2. Verfahren nach Anspruch 1, das von einem Endgerät außerhalb (120) des Dokuments (100) umgesetzt wird.

3. Verfahren nach Anspruch 2, wobei das Format des digitalen Originalbildes (IO) das JPEG, JPEG 2000 oder WSQ Format ist.

4. Verfahren nach einem der Ansprüche 1 bis 3, wobei jeder Originalblock (BO) gemäß einem charakteristischen Punkt des digitalen Originalbildes (IO) erhalten wird.

5. Programm (P1), umfassend Anweisungen für das Ausführen der Schritte eines Verfahrens zum Erstellen nach einem der Ansprüche 1 bis 4, wenn das Programm (P1) von einem Prozessor ausgeführt wird.

6. Prozessorlesbares Aufzeichnungsmedium (204), auf dem ein Programm (P1) aufgezeichnet ist, das Anweisungen für das Ausführen der Schritte eines Verfahrens zum Erstellen nach einem der Ansprüche 1 bis 4 aufweist.

7. Elektronisches Identitätsdokument (100), das geeignet ist, ein digitales Bild (ID) zu markieren, umfassend:
- die Datei (FD) des digitalen Bildes (ID), die mit einer Originaldatei (FO) identisch ist oder erstellt wird, indem die Originaldatenblöcke (BO) von der Originaldatei (FO) entfernt werden,
- eine Datenstruktur (SD), die für mindestens einen Datenblock der Originaldatei (FO) mindestens zwei modifizierte Blöcke (BM) aufweist, wobei jeder modifizierte Block (BM) in der Datenstruktur (SD) durch die Position (@1- @n) des Blocks in der Datei (FD) des digitalen Bildes (ID) und durch einen unterschiedlichen Eintrag (E1-En) indiziert ist,
- ein Modul zum Erhalten (102) eines Markers (MQ) ausgehend von einer Information (IN), die von einem Leseendgerät (140) des Dokuments empfangen wird,
- ein Modul zum Erhalten (104) mindestens eines modifizierten Blocks (BM), der in der Datenstruktur (SD) durch einen Eintrag (E1-En) und eine Position (@1- @n), die von dem Marker (MQ) erhalten werden, indiziert ist,
- ein Modul zum Erstellen (106) einer markierten Datei (FM), indem der mindestens eine erhaltene modifizierte Block (BM) in der Datei (FD) an der entsprechenden erhaltenen Position (@1- @n) eingefügt wird oder indem der Block, der der erhaltenen Position (@1- @n) entspricht, in der Datei (FD) durch den mindestens einen entsprechenden erhaltenen modifizierten Block (BM) ersetzt wird,
- ein Modul zum Senden (108) eines markierten digitalen Bildes (IM), das der markierten Datei (FM) an dem Leseendgerät (140) entspricht.

8. Verfahren zum Markieren eines digitalen Bildes (ID), das von einem elektronischen Identitätsdokument (100) umgesetzt wird, umfassend:
- die Datei (FD) des digitalen Bildes (ID), die mit einer Originaldatei (FO) identisch ist oder erstellt wird, indem die Originaldatenblöcke (BO) von der Originaldatei (FO) entfernt werden,
- eine Datenstruktur (SD), die für mindestens einen Datenblock der Originaldatei (FO) mindestens zwei modifizierte Blöcke (BM) aufweist, wobei jeder modifizierte Block (BM) in der Datenstruktur (SD) durch die Position (@1- @n) des Blocks in der Datei (FD) des digitalen Bildes (ID) und durch einen unterschiedlichen Eintrag (E1-En) indiziert wird,
wobei das Verfahren die folgenden Schritte aufweist:
- Erhalten (S60) eines Markers (MQ) ausgehend von einer Information (IN), die von einem Leseendgerät (140) des Dokuments empfangen wird,
- Erhalten (S62) mindestens eines modifizierten Blocks (BM), der in der Datenstruktur (SD) durch einen Eintrag (E1-En) und eine Position (@1-@n), die von dem Marker (MQ) erhalten werden, indiziert wird,
- Erstellen (S64) einer markierten Datei (FM), indem der mindestens eine erhaltene modifizierte Block (BM) in die Datei (FD) an der entsprechenden erhaltenen Position (@1-@n) eingefügt wird oder indem der Block, der der erhaltenen Position (@1-@n) entspricht, in der Datei (FD) durch den mindestens einen entsprechenden erhaltenen modifizierten Block (BM) ersetzt wird,
- Senden (S66) eines markierten digitalen Bildes (IM), das der markierten Datei (FM) an dem Leseendgerät (140) entspricht.

9. Verfahren nach Anspruch 8, wobei das Ergebnis des Ersetzens oder des Einfügens für das bloße Auge unsichtbar ist, wenn das markierte digitale Bild (IM) auf einer graphischen Schnittstelle angezeigt und/oder gedruckt wird.

10. Verfahren nach Anspruch 8, wobei das Ergebnis des Ersetzens oder des Einfügens mit bloßem Auge sichtbar ist, wenn das markierte digitale Bild (IM) auf einer graphischen Schnittstelle angezeigt und/oder gedruckt wird.

11. Programm (P2), umfassend Anweisungen für das Ausführen der Schritte eines Verfahrens zum Markieren nach einem der Ansprüche 8 bis 10, wenn das Programm (P2) von einem elektronischen Identitätsdokument (100) ausgeführt wird.

12. Aufzeichnungsmedium (504), das von einem elektronischen Identitätsdokument (100) lesbar ist, auf dem ein Programm (P2) aufgezeichnet ist, das Anweisungen für das Ausführen der Schritte eines Verfahrens zum Markieren nach einem der Ansprüche 8 bis 10 aufweist.

## Claims

1. A method for creating an electronic identity document (100), said method including the following steps:
- obtaining (S30) the file (FO) from an original digital image (10),
- obtaining (S32) at least one data block (BO) from said file (FO), called original block (BO),
- for each original block (BO):
- creating (S34) at least two modified blocks (BM),
- recording (S36) each modified block (BM) in a data structure (SD) of said document (100), each modified block (BM) being indexed in said data structure (SD) by a different entry (E1-En) and by the location (@1-@n) of said original block (BO) in the file (FD) of a digital image intended to be marked (ID) by using at least one modified block (BM) indexed in the data structure (SD), the entry and the location of said modified block (BM) being obtained from a marker (MQ) obtained from a received information (IN) coming from a reading terminal (140) of said document,
wherein said file (FD) of a digital image intended to be marked (ID) is identical to an original file (FO) or created by removing the original data blocks (BO) from the original file (FO).

2. The method according to claim 1, implemented by a terminal (120) external to said document (100).

3. The method according to claim 2, wherein the format of the original digital image (IO) is the JPEG, JPEG 2000 or WSQ format.

4. The method according to any one of claims 1 to 3, wherein each original block (BO) is obtained according to a characteristic point of the original digital image (IO).

5. A program (P1) including instructions for the execution of the steps of a creation method according to any one of claims 1 to 4 when said program (P1) is executed by a processor.

6. A recording medium (204) readable by a processor on which a program (P1) is recorded comprising instructions for the execution of the steps of a creation method according to any one of claims 1 to 4.

7. An electronic identity document (100) able to mark a digital image (ID), including:
- the file (FD) of said digital image (ID), identical to an original file (FO) or created by removing the original data blocks (BO) of the original file (FO),
- a data structure (SD) including for at least one data block of the original file (FO), at least two modified blocks (BM), each modified block (BM) being indexed in said data structure (SD) by the location (@1-@n) of said block in the file (FD) of said digital image (ID) and by a different entry (E1-En),
- a module for obtaining (102) a marker (MQ) from a received information (IN) coming from a reading terminal (140) of said document,
- a module for obtaining (104) at least one modified block (BM), indexed in the data structure (SD) by an entry (E1-En) and a location (@1-@n) obtained from said marker (MQ),
- a module for creating (106) a marked file (FM) by inserting, in said file (FD), said at least one obtained modified block (BM), at said corresponding obtained location (@1-@n) or by substituting, in said file (FD), the block corresponding to said obtained location (@1-@n), by said at least one corresponding obtained modified block (BM),
- a module for sending (108) a marked digital image (IM) corresponding to said marked file (FM) to the reading terminal (140).

8. A method for marking a digital image (ID), implemented by an electronic identity document (100) comprising:
- the file (FD) of said digital image (ID), identical to an original file (FO) or created by removing the original data blocks (BO) of the original file (FO),
- a data structure (SD) including for at least one data block of the original file (FO), at least two modified blocks (BM), each modified block (BM) being indexed in said data structure (SD) by the location (@1-@n) of said block in the file (FD) of said digital image (ID) and by a different entry (E1-En),
said method including the following steps:
- obtaining (S60) a marker (MQ) from a received information (IN) coming from a reading terminal (140) of said document,
- obtaining (S62) at least one modified block (BM), indexed in the data structure (SD) by an entry (E1-En) and a location (@1-@n) obtained from said marker (MQ),
- creating (S64) a marked file (FM) by inserting, in said file (FD), said at least one obtained modified block (BM), at said corresponding obtained location (@1-@n), or by substituting, in said file (FD), the block corresponding to said obtained location (@1-@n), by said at least one corresponding obtained modified block (BM),
- sending (S66) a marked digital image (IM) corresponding to said marked file (FM) to the reading terminal (140).

9. The method according to claim 8, wherein the result of the substitution or of the insertion is invisible to the naked eye when the marked digital image (IM) is displayed on a graphical interface and/or printed.

10. The method according to claim 8, wherein the result of the substitution or of the insertion is visible to the naked eye when the marked digital image (IM) is displayed on a graphical interface and/or printed.

11. A program (P2) including instructions for the execution of the steps of a marking method according to any one of claims 8 to 10 when said program (P2) is executed by an electronic identity document (100).

12. A recording medium (504) readable by an electronic identity document (100) on which a program (P2) is recorded comprising instructions for the execution of the steps of a marking method according to any one of claims 8 to 10.
